## Europäisches Patentamt
## European Patent Office
## Office européen des brevets

(11) Publication number: **0 119 072**
**B1**

# EUROPEAN PATENT SPECIFICATION

(45) Date of publication of patent specification: **27.07.88**

(21) Application number: **84301582.7**

(22) Date of filing: **09.03.84**

(51) Int. Cl.⁴: **G 01 F 23/22, G 01 F 23/28**

(54) Device for indicating level of liquid contents on a container.

(30) Priority: **10.03.83 GB 8306569**

(43) Date of publication of application:
**19.09.84 Bulletin 84/38**

(45) Publication of the grant of the patent:
**27.07.88 Bulletin 88/30**

(84) Designated Contracting States:
**BE CH DE FR GB IT LI NL SE**

(56) References cited:
**WO-A-82/01249**
**US-A-3 696 675**
**US-A-4 156 365**

(73) Proprietor: **LIQUID CRYSTAL DEVICES LIMITED**
**Stonefield Way**
**Ruislip Middlesex HA4 0YW (GB)**

(72) Inventor: **Archer, Keith Graham**
**7A Melrose Gardens**
**London W.6. (GB)**
Inventor: **Rickson, Colin David**
**The Dene Aspley Hill**
**Woburn Sands Buckinghamshire (GB)**

(74) Representative: **Newby, Martin John et al**
**J.Y. & G.W. Johnson Furnival House 14-18 High Holborn**
**London WC1V 6DE (GB)**

Courier Press, Leamington Spa, England.

## Description

### Background of the invention

#### 1. Field of the invention

This invention relates to a device for providing a visual indication of the level of a liquid contained in a container having walls with good heat conducting properties, the device being of the kind comprising temperature-sensing strip means for making good thermal contact with the external surface of the container walls and including at least one thermochromatic liquid crystal composition for exhibiting colour play over a broad temperature range. In particular, but not exclusively, the device is intended to provide a visual indication of the level of liquid gas, e.g. liquid propane or liquid butane, in a metal walled, valved container of the kind used for camping or space heating purposes.

A liquid gas contained in a metal walled container partially vaporises so that liquid gas vapour exists above the free surface of the liquid gas. If for a period of time the ambient air temperature is maintained constant and the pressure inside the container is also maintained constant, i.e. no liquid gas is withdrawn from the container, a state of equilibrium exists between the liquid and the vapour of the liquid gas and there will be no temperature difference in the container wall in the vicinity of the free liquid surface.

If gas is withdrawn from the container, in normal operation of the latter, more liquid gas will vaporise and the supply of the latent heat to permit that vaporisation will give rise to a temperature difference in the walls of the container in the vicinity of the free surface.

Alternatively, or in addition, under normal storage and operating conditions of the container, the surrounding ambient air temperature fluctuates slowly in each 24 hour cycle. In these conditions a state of temperature equilibrium between the temperatures of the liquid gas in the container, the vapour of the liquid gas above the liquid gas and the ambient air temperature does not exist. Instead, temperature differentials are created between the temperatures of the liquid gas, the liquid gas vapour and the ambient air resulting in vaporisation of the liquid gas or condensation of the liquid gas vapour. These temperature differentials exist because there is a time lag between the response of the liquid gas and the liquid gas vapour to changing ambient air temperature and because the thermal capacities of the liquid gas and the liquid gas vapour are different, the liquid gas responding more slowly to changing ambient air temperature, retaining its heat longer, and having a higher inertia to heating, than the liquid gas vapour.

Since the metal walls of the container have good thermal conductivity, the temperatures of the liquid gas and liquid gas vapour are conducted through the container walls. Thus at a certain level below the free surface of the liquid gas, the external surfaces of the container walls are at a temperature $T_1$, substantially the same as the liquid gas temperature at that level, whereas at a certain level above the free surface of the liquid gas the container walls are typically at a temperature $T_2$, substantially the same as the temperature of the liquid gas vapour at that level. When the liquid gas is withdrawn from the container, a temperature gradient will exist at the level of the free surface of the liquid gas, and for short distances above and below this level, even if the air surrounding the container is maintained at a substantially constant temperature so that the temperatures $T_1$ and $T_2$ are the same. In such cases the temperature gradient is caused by the latent heat of vaporisation creating a drop in temperature of the container walls at the liquid/vapour interface.

#### 2. Description of the prior art

It has previously been proposed in US—A—3696675 and US—A—4358955 to provide a device of the kind referred to having a single strip of temperature responsive thermochromatic coating responsive to a wide range of temperatures. With such known devices, the contents level of a container is determined by sensing a comparatively large temperature difference, e.g. 5°C or more, between the portions of the container wall above and below the free surface of the contents occasioned by subjecting the container to a comparatively large and rapid change of temperature. Such a change of temperature may be induced in a number of ways. For example, when the container is exposed to sunlight, such temperature changes may occur naturally at sunrise and sunset. However, at other times it is necessary to induce the temperature changes by applying liquid, e.g. water either warmer or colder than the ambient air temperature to the walls of the container.

These known devices are not particularly suitable since they are not capable of detecting, at a wall of a container, temperature gradients having a narrow temperature range, e.g. less than 3.5°C and typically about 2°C. Typically a temperature gradient with such a narrow temperature range is created naturally, when liquid gas is withdrawn from a container, at the level of the liquid/vapour interface even when the temperature of the air surrounding the container is substantially constant or only fluctuates slowly. Furthermore, the methods described above of artificially creating comparatively large temperature differences between the temperatures of the liquid and vapour phases of a contained liquid gas in order to determine the level of the liquid/vapour interface of the contained liquid gas are inconvenient to perform.

### Summary of the invention

An aim of the invention as claimed is to provide a device capable of determining the position of a temperature gradient on the external surface of a wall of a liquid-containing container for providing a visual indication of the level of the free surface of the liquid within the container. Such a device is intended to be able to detect temperature gradients having a narrow temperature range caused, for example, by vaporisation of the liquid contents of the container when the contents are withdrawn from the container.

According to the invention a device of the kind referred to for providing a visual indication of the level of a liquid contained in a container having walls with good heat conducting properties, is characterised in that the temperature-sensing strip means comprises a number of temperature-sensing strips which exhibit colour play over a plurality of narrow, spaced apart temperature ranges selected so that on placing the strips in thermal contact with a container containing liquid so that the strips bridge across the level of the free surface of the contained liquid, at least one of the strips will exhibit colour play, to provide a visual indication of the level of the contained liquid, when detecting a temperature gradient established on the external surface of the walls of the container adjacent side level of the contained liquid as a result, at least in part, of vaporisation of the liquid occasioned by withdrawing some of the contents from the container.

In the case of liquid gas stored in a sealed, valved container, the drop in pressure within the container occasioned by a controlled withdrawal of the liquid gas, e.g. when the container is connected to a stove or other burner, causes vaporisation of the contained liquid gas. The latent heat required to bring about this vaporisation causes heat to be taken from the walls of the container in the region of the liquid/vapour interface of the liquid gas. A temperature gradient is quickly established at the external surface of the walls of the container adjacent the level of the interface. Although the temperature of the temperature gradient may change during use of the container, it has been found that the difference between the maximum and minimum temperatures within the temperature gradient at any time remains substantially consant for any given application. This temperature difference is a function of the wall thickness of the container and the rate of withdrawal of the liquid gas from the container. In addition extremes of ambient air temperature will affect the temperature difference.

The use of comparatively narrow colour play temperature ranges enables the detection of temperature gradients having a comparatively narrow temperature range. Furthermore, by arranging for there to be gaps between the colour play temperature ranges, the total number of colour play temperature ranges, and hence the total number of temperature-sensing strips, required to cover said broad temperature range is minimised.

Preferably the temperature-sensing strips are arranged parallel to each other with or without gaps between adjacent strips. However, it is possible for some or all of the strips to partially or completely overlie each other.

In a particularly advantageous embodiment of the invention, the number of temperature-sensing strips is further minimised by arranging for at least some, and preferably all, of the temperature-sensing strips each to exhibit colour play over more than one, typically two, temperature ranges.

The thermochromic liquid crystal compositions of each temperature-sensing strip is or are preferably applied to a substrate, e.g. a polyester substrate, in one or more layers as a liquid crystal ink or liquid crystal inks. If a single layer of liquid crystal ink is applied to the substrate, the ink suitably includes polymer microencapsulated droplets of a first thermochromic liquid crystal composition having a first colour play temperature range and polymer microencapsulated droplets of a second thermochromic liquid crystal composition having a second colour play temperature range. It is possible for the liquid crystal ink to include polymer microencapsulated droplets of one or more other thermochromic liquid crystal compositions having different colour play temperature ranges. However the brightness or intensity of the visual display of the temperature-sensing strip is reduced the greater the number of different thermochromic liquid crystal compositions that are incorporated in the ink. For this reason it is preferred that only two such thermochromic liquid crystal compositions be incorporated in a liquid crystal ink. If more than one layer of liquid crystal ink is applied to the substrate, different liquid crystal inks for the different layers may be prepared by protecting the thermochromic liquid crystal composition of each layer in a polymer by microencapsulation or dispersion.

Preferably a device according to the invention includes magnetic means for enabling the device to be removably fixed to a container wall made of magnetic material. Suitably the magnetic means is flexible, typically being in the form of a flexible polymer backing layer, having a thickness of from 0.2—0.6 mm, e.g. 0.5 mm, and incorporating magnetic particles.

In a device according to the invention designed for providing a visual indication of the level of liquid gas, e.g. liquid butane, in a conventional liquid gas cylinder (e.g. a so-called "space heating gas cylinder" containing, for example 13—15 kg of liquid butane when full), the maximum expected variation in temperature of the external surface of the cylinder wall at regions above and below the level of the contained liquid gas at any one time, produced as a result of extracting gas from the container, is approximately 2.5°C and is normally under 2°C, e.g. 1.5°C. In this case each colour play temperature range is preferably from 0.25°C to 2.5°C, e.g. 1.25°C, and the gap between adjacent colour play temperature ranges is preferably from 0.5°C to 1.5°C, e.g. 1.0°C, with a temperature difference of from 0.5°C to 4°C between the mid temperatures of any two adjacent colour play temperature ranges. Thus, with the exemplified values given above, only eight colour play temperature ranges (6—7.25°C, 8.25—9.5°C, 10.5—11.75°C, 12.75—14°C, 15—16.25°C, 17.25—18.5°C, 19.5—20.75°C and 21.75—23°C) are required for sensing cylinder wall temperatures of from 6°C to 23°C. By arranging two colour play temperature ranges to be sensed in each temperature-sensing strip (e.g. 6—7.25°C and 15—16.25°C in a first strip, 8.25—9.5°C and 17.25—18.5°C in a second strip, 10.5—11.75°C and 19.5—20.75°C in a third strip and 12.75—14°C and 21.75—23°C in a fourth strip), only four temperature-sensing strips are required. The wall temperature sensing range of from 6°C to 23°C covers most container temperatures encountered during normal usage of a gas cylinder used for space heating. However if this wall temperature range is considered to be too narrow one or more further temperature-sensing strips may be employed. Alternatively a warning strip may be employed having comparatively wide colour play temperature ranges (e.g. from 0—6°C and from 23—30°C) at either end of the normal wall temperature sensing range. An indication by the warning strip that the wall temperature of the cylinder is within either of the wide colour play ranges means that the level of the liquid gas within the cylinder cannot at that time be visually indicated.

Brief description of the drawings

The invention will now be described by way of example, with reference to the accompanying drawings, in which:

Figure 1 is a plan of a flexible device according to the invention,

Figure 2 is a sectional view taken on the line II—II of Figure 1,

Figure 3 is a schematic temperature profile of the temperature at the external surface of a wall of a conventional space heating gas cylinder partly filled with liquid butane, and

Figures 4 and 5 are graphs showing how the temperatures of ambient air, liquid butane contained in a space heating gas cylinder and vapour in the gas cylinder from the liquid butane change over periods of time for two different rates of gas take-off from the cylinder.

Description of the preferred embodiments

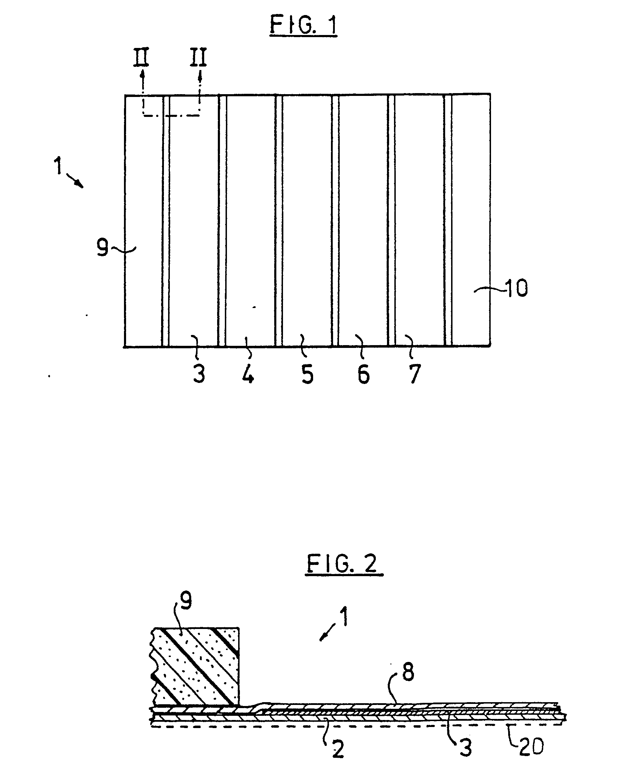

Figures 1 and 2 show a device, generally designated by the reference numeral 1, for providing a visual indication of the level of the liquid contained in a container (not shown), e.g. a conventional space heating gas cylinder containing, when full, 13—15 kg of liquid butane.

The device 1 comprises a thin black plastics sheet substrate 2, for example a polyester sheet, four temperature-sensing strips 3—6 and a warning strip 7 arranged parallel to each other, a transparent plastics covering sheet 8 and a pair of flexible magnetic strips 9 and 10 arranged parallel to the strips 3—7 along opposed sides of the device 1. The strips 3—7 suitably each have a length of approximately 10 cm and a width of approximately 1 cm and are spaced approximately 1.5 mm apart. Each magnetic strip 9, 10 comprises a rubber strip impregnated with magnetic particles to enable the device 1 to be removably, magnetically fixed to a container having walls of a ferromagnetic material in such a manner that the strips 3—7 and the supporting substrate 2 are placed in good thermal contact with the wall of the container.

The strips 3—7 are in the form of thermochromic liquid crystal ink coatings containing droplets of thermochromic liquid crystal compositions microencapsulated in polymer shells. These thermochromic liquid crystal compositions are each able to exist in a smectic phase, a cholesteric phase and an isotropic phase according to the temperature of the composition. At a temperature slightly above the transition from the smectic phase to the colesteric phase a vivid colour play from red to blue occurs and the temperature over which this colour play takes place is known as the colour play temperature range.

The thermochromic liquid crystal ink forming each strip 3—7 contains two different microencapsulated thermochromic liquid crystal compositions which exhibit colour play over two different colour play temperature ranges. In particular the temperature-sensing strips 3—6 are designed to exhibit colour play over eight nonoverlapping and preferably equal colour play temperature ranges $\Delta T1$—$\Delta T8$ and the warning strip 7 is designed to exhibit colour play over two broader colour play temperature ranges $\Delta T0$ and $\Delta T9$. Thus the strip 3 is arranged to exhibit colour play over the temperature ranges $\Delta T1$ and $\Delta T5$, the strip 4 is arranged to exhibit colour play over the temperature ranges $\Delta T2$ and $\Delta T6$, the strip 5 is arranged to exhibit colour play over the tempreature ranges $\Delta T3$ and $\Delta T7$ and the strip 6 is arranged to exhibit colour play over the temperature ranges $\Delta T4$ and $\Delta T8$.

The preferred thermochromic liquid crystal compositions are blends of non-sterol chiral nematic liquid crystals. Information concerning the preparation of blends of such compounds to produce a full range of colour play over a given temperature range is disclosed in technical pamphlets published by BDH Chemicals Limited under the titles "Thermochromic Mixtures TM74A,B and TM75A,B" and "Thermochromic Liquid Crystals" by Dr. D. G. McDonnell.

In order to minimise the number of temperature-sensing strips required to sense the external surface temperature of a container wall—which surface temperature, in normal use, may fluctuate over a relatively wide temperature range—it is essential for there to be a temperature gap between each adjacent pair of the colour play temperature ranges $\Delta T1$—$\Delta T8$. However the colour play temperature rnages have to be carefully selected so that it is not possible for a temperature gradient to exist on the external wall of a container at the surface level of a liquid contained therein which falls entirely within a temperature gap. Furthermore the colour play temperature ranges should be sufficiently narrow to ensure full and vidid colour plays over the normal ranges of temperature experienced at different times at the external surface of a container in the region of the surface level of the contained liquid.

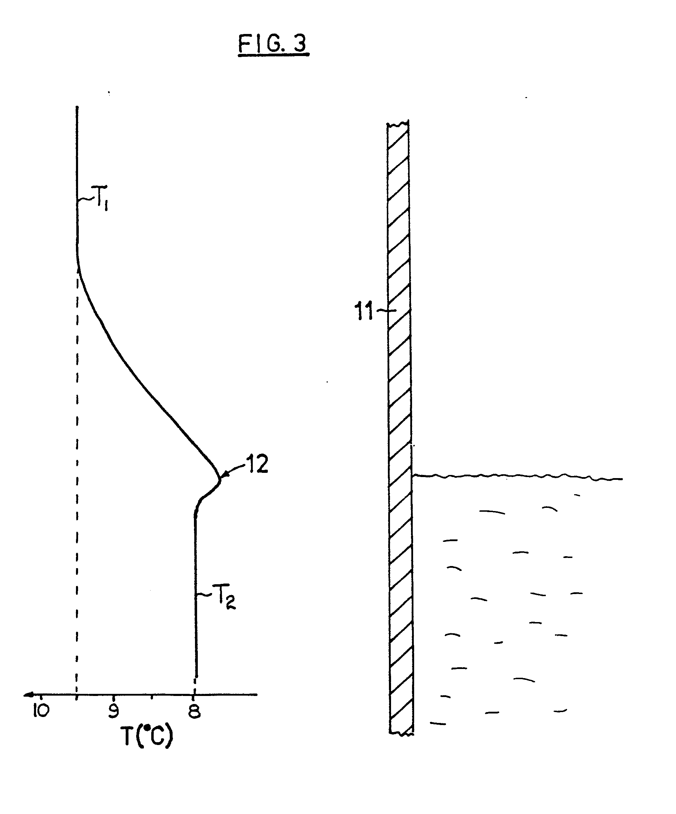

When designing a device according to the invention for a particular application it is necessary to know the conditions existing at the wall of a container during normal usage of the container. Figures 3—5 show, for a typical space heating gas cylinder containing liquid butane, how temperature differentials are established between the liquid butane and its vapour during normal usage of the cylinder.

Figure 3 is a schematic sectional view through part of a wall 11 of the cylinder and the graph shows a typical temperature profile of the external surface of the cylinder wall in the region of the surface level of the liquid butane contained in the cylinder. From the temperature profile it can be seen that, at a certain level above the free surface of the liquid phase, the wall temperature stabilises at a temperature $T_1$ (e.g. 9.5°C), whereas at a certain level below the free surface of the liquid butane, the wall temperature stabilises at a temperature $T_2$ (e.g. 8°C). In the region of the free surface of the liquid butane, a temperature gradient exists varying between approximately 7.5°C and approximately 9.5°C—i.e. a temperature differential of approximately 2°C. The latent heat of vaporisation of the liquid butane causes a drop at 12 in the wall temperature in the region of the free surface of the liquid butane.

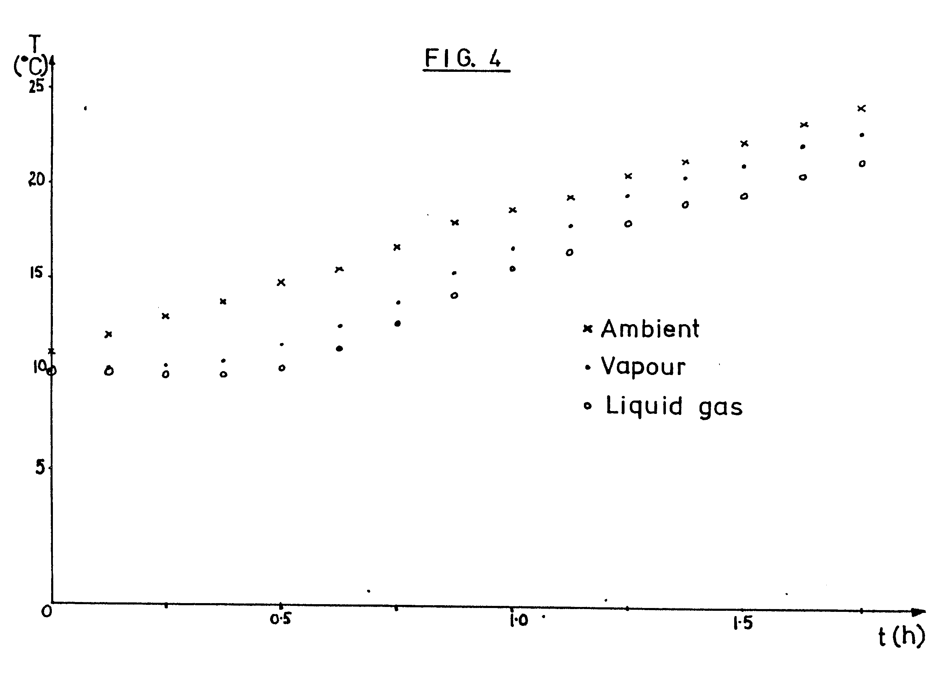

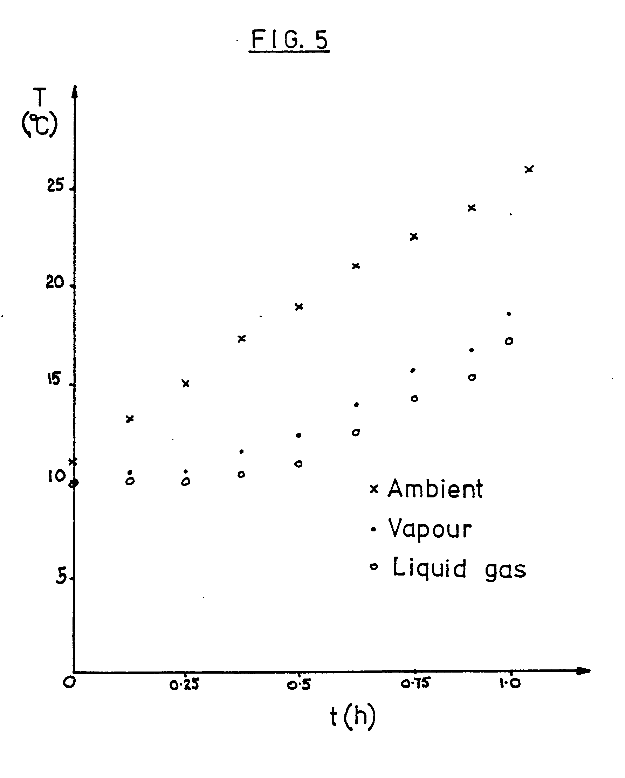

Figures 4 and 5 show graphs illustrating how the temperatures of the ambient air, liquid butane and vapour from the liquid butane vary with time at different rates of gas off-take. For the graph of Figure 4, the cylinder, which had been maintained at a steady state temperature of 10°C, was introduced into a room having ambient air temperature of 11°C and the gas was taken off at a rate of 0.05 m³/h. For the graph of Figure 5, the same conditions prevailed except that the gas was taken off at a rate of 0.14 m³/h.

Both the graphs shown in Figures 4 and 5 illustrate that a temperature differential between the liquid butane and the vapour was established after a relatively short period of time, e.g. 15 minutes. During use of the container, this temperature differential stabilised at between 1.5—2°C. In order for this temperature differential to be detected in a device according to the invention, each colour play temperature range should be less than 1.5°C and the temperature gaps between adjacent colour play temperature ranges should also be less than 1.5°C. Bearing this in mind, the device 1 shown in Figures 1 and 2, could be designed with ΔT1=6—7.25°C, ΔT2=8.25—9.5°C, ΔT3=10.5—11.75°C, ΔT4=12.75—14°C, ΔT5=15—16.25°C, ΔT6=17.25—18.5°C, ΔT7=19.5—20.75°C and ΔT8=21.75—23°C. This enables the device 1 to sense temperatures within the broad range 6—23°C. At least one of the temperature-sensing strips will display a colour if the temperature gradient at the container wall, in the region of the free surface of the contained liquid, falls within this broad temperature range. If the temperature gradient is outside this broad temperature range, a warning may be given that the liquid level cannot be indicated. This is achieved by arranging for the warning strip 7 to have colour play in colour play temperature ranges (e.g. 0—6°C and 23—30°C) below and above the broad temperature range 6—23°C.

The device 1 described above is fundamentally different from previously known devices in that it employs a plurality of temperature-sensing strips carefully selected to detect the small temperature difference established at a liquid/vapour interface and caused by the vaporisation of the liquid during use. The device 1 requires not external heat application or variation in ambient temperature to function.

The flexible magnetic strips 9 and 10 enable the device 1 to be used over and over again on different cylinders or containers. Normally the device 1 is positioned at the bottom of a vertical-walled cylinder with the strips 3—7 extending vertically upwards. Visual indication of the level of liquid within a container is given by the colour pattern exhibited by one or more of the temperature-sensing strips.

In other embodiments of the invention a device without the magnetic strips 9 and 10 could be permanently fixed, e.g. adhered, to the bottom of a container for providing a visual indication of the level of liquid contained therein. Alternatively, other forms of magnetic or non-magnetic means could be provided for enabling the device to be removably fixed to a container. A particularly advantageous form of removable magnetic fixing replacing magnetic strips 9 and 10 comprises a flexible backing layer shown in dashed lines in Figure 2 (as reference numeral 20) of a polymer material, typically having a thickness of from 0.2—0.6 mm, e.g. 0.5 mm, embedded with magnetic particles. The backing layer would be provided over the entire back surface of the device, its relative thinness and flexibility enabling it to adapt to the contours of a container ensuring good thermal contact therewith.

Instead of the temperature-sensing strips comprising a single layer of a thermochromic liquid crystal ink containing two different microencapsulated thermochromic liquid crystal compositions, each temperature-sensing strip could comprise two layers of thermochromic liquid crystal inks, containing different thermochromic liquid crystal compositions each protected in a polymer by microencapsulation or dispersion. Alternatively the, or some of the, temperature-sensing strips may partially or completely overlie each other.

Throughout the specification the terms "thermochromic" and "thermochromatic" have been used interchangeably and are intended to have the same meaning.

**Claims**

1. A device (1) for providing a visual indication of the level of the liquid contained in a container having walls (11) with good heat conducting properties, the device comprising temperature-sensing strip means (2—10) for making good thermal contact with the external surface of the container walls and including at least one thermochromatic liquid crystal composition for exhibiting colour play over a broad temperature range, characterised in that the temperature-sensing strip means comprises a number of temperature-sensing strips (3—7) which exhibit colour play over a plurality of narrow, spaced apart temperature ranges selected so that on placing the strips in thermal contact with walls of a container containing liquid so that the strips bridge across the level of the free surface of the contained liquid, at least one of the strips (3—7) will exhibit colour play, to provide a visual indication of the level of the contained liquid, when detecting a temperature gradient established on the external surface of the walls (11) of the container adjacent said level of the contained liquid as a result, at least in part, of vaporisation of the liquid occasioned by withdrawing some of the contents from the container.

2. A device (1) according to claim 1, characterised in that the temperature-sensing strips (3—7) are arranged parallel to each other.

3. A device (1) according to claim 2, characterised in that the said strips (3—7) are positioned side by side.

4. A device (1) according to claim 1, characterised in that some or all of the temperature-sensing strips (3—7) partially or completely overlie each other.

5. A device according to any of claims 2 to 4, characterised in that at least some of the temperature-sensing strips exhibit colour play over more than one temperature range.

6. A device according to any of the preceding claims, characterised in that the thermochromic liquid crystal composition of each temperature-sensing strip is applied to a substrate in one or more layers as a liquid crystal ink or inks.

7. A device according to claim 6, characterised in that the liquid crystal ink includes polymer microencapsulated droplets of at least one thermochromic liquid crystal composition having at least one colour play temperature range.

8. A device according to any of the preceding claims, characterised by magnetic means for enabling the device to be removably fixed to a container wall made of magnetic material.

9. A device according to claim 8, characterised in that said magnetic means comprises a flexible magnetic backing layer of a polymer incorporating magnetic particles.

10. A device according to claim 9, characterised in that said magnetic backing layer has a thickness of from 0.2—0.6 mm, typically approximately 0.5 mm.

11. A device according to any of the preceding claims, characterised in that the said temperature gradient has a temperature range of less than 3.5°C.

12. A device according to any of the preceding claims, characterised in that the difference between the maximum and minimum temperature of each of said plurality of temperature ranges is from 0.25—2.5°C.

13. A device according to any of the preceding claims, characterised in that the temperature difference between the median temperature of any two adjacent of said plurality of temperature ranges is from 0.5—4.0°C.

**Patentansprüche**

1. Vorrichtung (1) zum Abgeben einer Sichtanzeige des Standes einer in einem Behälter mit Wänden (11) mit guten Wärmeleiteigenschaften enthaltenen Flüssigkeit, mit temperaturfühlenden Streifenmitteln (2—10) zur guten thermischen Kontaktierung der Aussenfläche der Behälterwände und mit mindestens einer thermochromen Flüssigkristall-Masse zum Hervorbringen eines Farbenspiels über einen weiten Temperaturbereich, dadurch gekennzeichnet, dass die temperaturfühlenden Streifenmittel eine Anzahl temperaturfühlender Streifen (3—7) umfassen, die ein Farbenspiel über einer Vielzahl eng beabstandeter Temperaturbereich hervorbringen, die so ausgewählt sind, dass, wenn die Streifen so in thermischen Kontakt mit Wänden eines eine Flüssigkeit enthaltenden Behälters gebracht werden, die Streifen den Spiegel der freien Oberfläche der eingeschlossenen Flüssigkeit überbrücken, mindestens einer der Streifen (3—7) ein Farbenspiel hervorbringt, um eine Sichtanzeige des Standes der eingeschlossenen Flüssigkeit abzugeben, wenn er einen sich mindestens als teilweises Resultat der Verdunstung der Flüssigkeit auf Grund der Entnahme eines Teils des Inhaltes aus dem Behälter auf der Aussenfläche der Behälterwände (11) neben dem besagten Spiegel der eingeschlossenen Flüssigkeit einstellenden Temperaturgradienten erfasst.

2. Vorrichtung (1) nach Anspruch 1, dadurch gekennzeichnet, dass die temperaturfühlenden Streifen (3—7) parallel zueinander angeordnet sind.

3. Vorrichtung (1) nach Anspruch 2, dadurch gekennzeichnet, dass die besagten Streifen (3—7) nebeneinander positioniert sind.

4. Vorrichtung (1) nach Anspruch 1, dadurch gekennzeichnet, dass sich einige oder alle der temperaturfülenden Streifen (3—7) einander teilweise oder vollständig überlappen.

5. Vorrichtung nach einem der Ansprüche 2 bis 4, dadurch gekennzeichnet, dass mindestens einige der temperaturfühlenden Streifen ein Farbenspiel über mehr als einen Temperaturbereich hervorbringen.

6. Vorrichtung nach einem der vorhergehenden Ansprüche, dadurch gekennzeichnet, dass die thermochrome Flüssigkristall-Masse jedes temperaturfühlenden Streifens in einer oder mehreren Lagen als Flüssigkristall-Farbe oder -Farben auf ein Substrat aufgebracht ist.

7. Vorrichtung nach Anspruch 6, dadurch gekennzeichnet, dass die Flüssigkristall-Farbe Polymer-mikroverkapselte Tröpfchen mindestens einer thermochromen Flüssigkristall-Masse mit mindestens einem Farbenspiel-Temperaturbereich enthält.

8. Vorrichtung nach einem der vorhergehenden Ansprüche, gekennzeichnet durch Magnetmittel, womit die Vorrichtung abnehmbar an einer aus magnetischem Werkstoff hergestellten Behälterwand befestigt werden kann.

9. Vorrichtung nach Anspruch 8, dadurch gekennzeichnet, dass das besagte Magnetmittel eine flexible magnetische Unterlagsschicht eines Magnetteilchen enthaltenden Polymers umfasst.

10. Vorrichtung nach Anspruch 9, dadurch gekennzeichnet, dass die bestagte magnetische Unterlagsschicht eine Stärke von 0,2 bis 0,6 mm, typisch ca. 0,5 mm besitzt.

11. Vorrichtung nach einem der vorhergehenden Ansprüche, dadurch gekennzeichnet, dass der besagte Temperaturgradient einen Temperaturbereich von weniger als 3,5°C besitzt.

12. Vorrichtung nach einem der vorhergehenden Ansprüche, dadurch gekennzeichnet, dass der Unterschied zwischen der Höchst- und Mindesttemperatur jedes der besagten Vielzahl von Temperaturbereichen 0,25 bis 2,5°C beträgt.

13. Vorrichtung nach einem der vorhergehenden Ansprüche, dadurch gekennzeichnet, dass der Temperaturunterschied zwischen der Mitteltemperatur von zwei beliebigen benachbarten der besagten Vielzahl von Temperaturbereichen 0,5 bis 4,0°C beträgt.

## Revendications

1. Un appareil (1) pour fournir une indication visuelle du niveau d'un liquide contenu dans un récipient ayant des parois (11) à bonnes caractéristiques de conduction de chaleur, l'appareil comportant un moyen de bande de détection de température (2—10) pour réaliser un bon contact thermique avec la face externe des parois du récipient et comprenant au moins une composition de crystaux liquides thermochromatiques pour montrer un jeu de couleur sur un large domaine de température, caractérisé en ce que le moyen de bande de détection de température comporte un grand nombre de bandes de détection de température (3—7) qui montrent un jeu de couleur sur plusieurs domaines de température étroits et séparés les uns des autres, choisis de façon à ce que, si l'on place les bandes en contact thermique avec les parois d'un récipient contenant du liquide de manière à ce que les bandes enjambent le niveau de la surface libre du liquide contenu, au moins une des bandes (3—7) montrera un jeu de couleur, de façon à fournir une indication visuelle du niveau du liquide contenu, lors de la détection d'un gradient de température qui est établi sur la face externe des parois (11) du récipient, à côté dudit niveau du liquide contenu, comme résultat, au moins en partie, d'une vaporisation du liquide due au retrait d'une partie du contenu hors du récipient.

2. Un appareil (1) selon la revendication 1, caractérisé en ce que les bandes de détection de température (3—7) sont disposées parallèlement les unes aux autres.

3. Un appareil (1) selon la revendication 2, caractérisé en ce que lesdites bandes (3—7) sont positionnées côte à côte.

4. Un appareil (1) selon la revendication 1, caractérisé en ce que certaines ou toutes les bandes de détection de température (3—7) se recouvrent partiellement ou complètement les unes les autres.

5. Un appareil selon l'une quelconque des revendications 2 à 4, caractérisé en ce qu'au moins quelques unes des bandes de détection de température montrent un jeu de couleurs sur plus d'un domaine de température.

6. Un appareil selon l'une quelconque des revendications précédentes, caractérisé en ce que la composition de cristaux liquides thermochromiques de chaque bande de détection de température est appliquée à un substrat en une ou plusieurs couches sous forme d'encre, ou encres, à cristaux liquides.

7. Un appareil selon la revendication 6, caractérisé en ce que l'encre à cristaux liquides comprend des gouttelettes microencapsulées de polymère d'au moins une composition de cristaux liquides thermochromiques, ayant au moins un domaine de température de jeu de couleur.

8. Un appareil selon l'une quelconque des revendications précédentes, caractérisé par un moyen magnétique pour permettre à l'appareil d'être fixé de façon amovible sur une paroi de récipient en matière magnétique.

9. Un appareil selon la revendication 8, caractérisé en ce que ledit moyen magnétique comporte une couche de support magnétique souple d'un polymère incorporant des particules magnétiques.

10. Un appareil selon la revendication 9, caractérisé en ce que ladite couche de support magnétique est d'une épaisseur de 0,2—0,6 mm, de façon typique de 0,5 mm environ.

11. Un appareil selon l'une quelconque des revendications précédentes, caractérisé en ce que ledit gradient de température a un domaine de température inférieur à 3,5°C.

12. Un appareil selon l'une quelconque des revendications précédentes, caractérisé en ce que la différence entre les températures maximum et minimum de chacun desdits plusieurs domaines de température est de 0,25—2,5°C.

13. Un appareil selon l'une quelconque des revendications précédentes, caractérisé en ce que la différence de température entre la température moyenne de deux domaines adjacents quelconques desdits plusieurs domaines de température est de 0,5—4,0°C.

0 119 072

FIG. 1

FIG. 2

1

## FIG. 3

FIG. 4

×  Ambient

•  Vapour

○  Liquid gas

0 119 072

FIG. 5